(19) Europäisches Patentamt / European Patent Office / Office européen des brevets

(11) **EP 3 858 615 A1**

(12) **EUROPEAN PATENT APPLICATION**
published in accordance with Art. 153(4) EPC

(43) Date of publication:
**04.08.2021 Bulletin 2021/31**

(21) Application number: **19865632.4**

(22) Date of filing: **27.09.2019**

(51) Int Cl.:
**B32B 33/00** (2006.01)   **B32B 27/30** (2006.01)
**B32B 27/32** (2006.01)

(86) International application number:
**PCT/JP2019/038253**

(87) International publication number:
**WO 2020/067469 (02.04.2020 Gazette 2020/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.09.2018 JP 2018184056**

(71) Applicant: **Dai Nippon Printing Co., Ltd.**
**Tokyo 162-8001 (JP)**

(72) Inventors:
• **GOTO, Osamu**
**Tokyo 162-8001 (JP)**
• **UENO, Masanori**
**Tokyo 162-8001 (JP)**

(74) Representative: **Müller-Boré & Partner**
**Patentanwälte PartG mbB**
**Friedenheimer Brücke 21**
**80639 München (DE)**

(54) **DECORATIVE SHEET AND DECORATIVE MATERIAL USING SAME**

(57)    Provided is a decorative sheet having a layer constituted by a resin composition comprising a resin having an ultraviolet absorption wavelength at least at 360 to 380 nm, wherein the decorative sheet can suppress time-dependent degradation caused by ultraviolet ray, and has excellent weather resistance. Also provided is a decorative material obtained using the decorative sheet. The present invention provides a decorative sheet comprising a base material layer, a transparent resin layer and a surface protection layer in the presented order, wherein at least one of the base material layer and the transparent resin layer is constituted by a resin composition comprising a resin having an ultraviolet absorption wavelength at least at 360 to 380 nm; and the surface protection layer as well as the transparent resin layer and the surface protection layer have a predetermined absorbance, and a decorative material obtained using the decorative sheet.

[Fig. 1]

**Description**

Technical Field

The present invention relates to a decorative sheet and a decorative material obtained using the same.

Background Art

Decorative sheets are used for the purpose of decorating or protecting the surfaces of building interior members such as walls, ceilings, floors, and front doors or exterior members such as exterior walls, roofs, eave ceilings, fences, and gates, joinery or fixture members such as window frames, doors, railings, baseboards, crown moldings, and covers as well as general furniture such as drawers, shelves, and desks, kitchen furniture such as dining tables and sinks, or cabinets for light electrical products or office automation equipment, etc. The decorative sheets that are used for the purpose of decorating or protecting surfaces of these members adopt, for example, a configuration having a surface protection layer on a base material.

When these decorative sheets are used for outdoor purposes, there arise problems associated with weather resistance, such as color change or resin degradation caused by the influence of the wind and rain and ultraviolet ray from insolation. Even for indoor purposes, for example, for purposes involving exposure to sunlight at the window or the like, there arise similar problems to those for outdoor purposes. For the decorative sheets that are used for such purposes, the addition of ultraviolet absorbers as weathering agents into surface protection layers of the decorative sheets is generally practiced as approaches for improving their weather resistance.

However, ultraviolet absorbers disadvantageously tend to bleed out from surface protection layers over time. The bleed-out of the ultraviolet absorbers mars the beauty of decorative sheet surfaces in such a way that stickiness is caused, and also presents problems such as reduction in weather resistance resulting from lowered ultraviolet absorber concentrations in the surface protection layers over time. Under these circumstances, decorative sheets having a cured resin layer composed mainly of an electron beam curable resin containing an electron beam reactive ultraviolet absorber selected from, for example, specific benzotriazole compounds, have been proposed (e.g., PTL1) in order to solve the bleed-out of the ultraviolet absorbers.

Citation List

Patent Literature

PTL1: JP 2000-117905 A

Summary of Invention

Technical Problem

A decorative sheet described in PTL1 is capable of solving the problems of bleed-out of ultraviolet absorbers.

Decorative sheets are increasingly required to have processing suitability for embossing, bending, molding, or the like. Decorative sheets having a layer containing a resin, such as polypropylene resin, excellent in processing suitability have been under development in recent years. For example, decorative sheets having a layer containing the resin, and further having a surface protection layer have been studied. In the case of applying a surface protection layer of PTL1 to a surface protection layer in such a decorative sheet having a layer containing the resin such as polypropylene resin, the decorative sheet frequently has the disadvantage that the decorative sheet cannot suppress time-dependent degradation caused by ultraviolet ray, even if the bleed-out of an ultraviolet absorber in the surface protection layer has been suppressed The inventors have further pursued investigation and consequently found that this disadvantage arises not only in decorative sheets having a layer containing polypropylene resin but frequently arises in decorative sheets having a layer containing polyvinyl chloride resin; and layers consisting of these resins are degraded by the energy (photon) of absorbed ultraviolet ray at wavelengths from 360 to 380 nm, mainly due to a common property of having an ultraviolet absorption wavelength at least at 360 to 380 nm among these resins.

The present invention has been made under these circumstances, and an object of the present invention is to provide a decorative sheet having a layer comprising a resin having a specific ultraviolet absorption wavelength, and a decorative material obtained using the same, wherein the decorative sheet suppresses time-dependent degradation caused by ultraviolet ray, and has excellent weather resistance.

Solution to Problem

To attain the object, the present invention provides the following [1] to [2].

[1] A decorative sheet comprising a base material layer, a transparent resin layer and a surface protection layer in the presented order, wherein at least one of the base material layer and the transparent resin layer is constituted by a resin composition comprising a resin having an ultraviolet absorption wavelength at least at 360 to 380 nm; and absorbance $A_{11}$ of the surface protection layer at wavelengths from 360 to 380 nm is more than 0.1, and absorbance $A_{12}$ of the transparent resin layer and the surface protection layer at wavelengths from 360 to 380 nm is more than 0.3, the absorbances being measured in accordance with JIS K0115: 2004.

[2] A decorative material comprising an adherend and a decorative sheet according to [1].

Advantageous Effects of Invention

The present invention can provide a decorative sheet having a layer comprising a resin having a specific ultraviolet absorption wavelength, and a decorative material obtained using the same, wherein the decorative sheet can suppress time-dependent degradation caused by ultraviolet ray, and has excellent weather resistance.

Brief Description of Drawings

[Fig. 1] Fig. 1 is a cross-sectional view showing one embodiment of the decorative sheet of the present invention.

[Fig. 2] Fig. 2 is a cross-sectional view showing one embodiment of the decorative material of the present invention.

Description of Embodiments

[Decorative sheet]

The decorative sheet of the present invention comprises a base material layer, a transparent resin layer and a surface protection layer in the presented order, wherein at least one of the base material layer and the transparent resin layer is constituted by a resin composition comprising a resin having an ultraviolet absorption wavelength at least at 360 to 380 nm; and absorbance $A_{11}$ of the surface protection layer at wavelengths from 360 to 380 nm (hereinafter, also simply referred to as "absorbance $A_{11}$") is more than 0.1, and absorbance $A_{12}$ of the transparent resin layer and the surface protection layer at wavelengths from 360 to 380 nm (hereinafter, also simply referred to as "absorbance $A_{12}$") is more than 0.3, the absorbances being measured in accordance with JIS K0115: 2004.

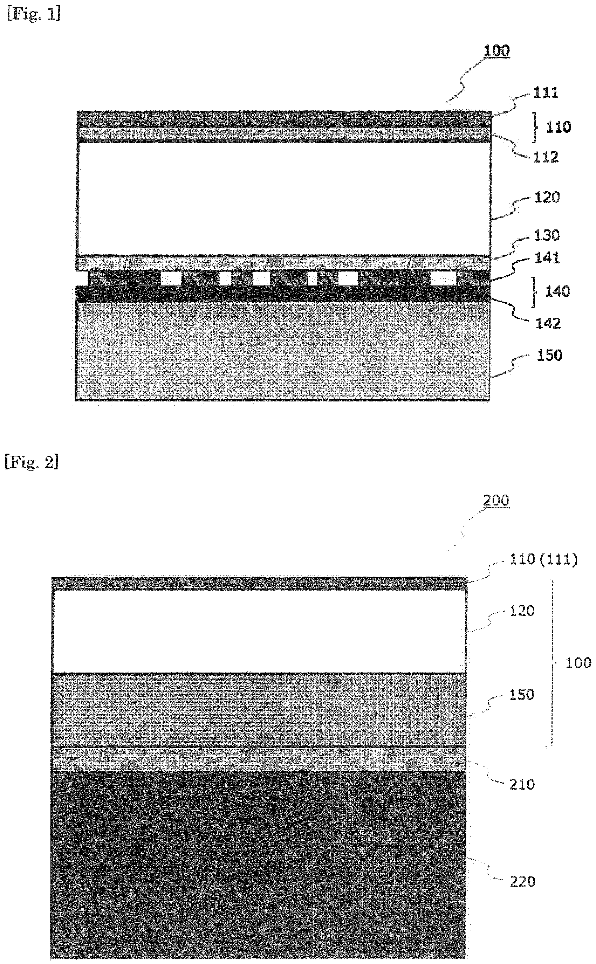

Fig. 1 is a cross-sectional view showing an embodiment of a decorative sheet 100 of the present invention.

The decorative sheet 100 of Fig. 1 comprises a base material layer 150, a transparent resin layer 120, and a surface protection layer 110 in the presented order. The surface protection layer 110 in the decorative sheet 100 of Fig. 1 is constituted by a primer layer 112 and a top coat layer 111. The decorative sheet 100 of Fig. 1 also has a decoration layer 140 consisting of a picture layer 141 and a solid colored layer 142, and an adhesive layer A 130 between the base material layer 150 and the transparent resin layer 120.

<Absorbance>

The decorative sheet of the present invention has absorbance $A_{11}$ of more than 0.1 and absorbance $A_{12}$ of more than 0.3. Larger absorbance $A_{11}$ means that less light (ultraviolet ray) at wavelengths from 360 to 380 nm reaches the transparent resin layer positioned on the side close to the surface protection layer. Larger absorbance $A_{12}$ means that less light (ultraviolet ray) at wavelengths from 360 to 380 nm reaches the base material layer positioned on the side distant from the surface protection layer. In the present invention, an absorbance at a specific wavelength band, such as the absorbance $A_{11}$ or the absorbance $A_{12}$, means a value obtained by averaging absorbances $A(\lambda)$ at respective wavelengths $\lambda$ within the range of $\lambda_{min} \leq \lambda \leq \lambda_{max}$ (hereinafter, also simply referred to "from $\lambda_{min}$ to $\lambda_{max}$") of such a wavelength band, as to the wavelengths within the range of $\lambda_{min} \leq \lambda \leq \lambda_{max}$. The averaged value will be mentioned in detail in the description about methods for measuring the absorbance $A_{11}$ and the absorbance $A_{12}$.

Conventional decorative sheets are usually designed such that ultraviolet absorbers are added only to surface protection layers, i.e., designed as to only the absorbance $A_{11}$. However, the design of only the absorbance $A_{11}$ has limitations on improvement in the weather resistance of decorative sheets. All the ultraviolet absorbers, albeit in varying degrees depending on their types, are lost over time due to bleed-out to the outside from surface protection layers so that the concentrations of the ultraviolet absorbers are lowered in the surface protection layers. Hence, such decorative sheets are capable of suppressing the degradation of each layer, such as a transparent resin layer immediately below a surface protection layer, and a lower base material layer, caused by ultraviolet ray in the short run and however, have the difficulty in obtaining excellent weather resistance by continuously suppressing degradation caused by ultraviolet ray over a long period. Usually, weather resistance is evaluated from the time for the degradation, attributed to ultraviolet ray, of each layer such as a transparent resin layer and a lower base material layer (i.e., the whole decorative sheet) exposed to sunlight including ultraviolet ray, to reach a predicted predetermined degree. Thus, the design to elevate only the absorbance $A_{11}$ of the surface protection layer has limitations on improvement in weather resistance.

Another possible design is to improve weather resistance (time to reach degradation) by adding an ultraviolet absorber into a surface protection layer such that the content of the ultraviolet absorber includes an extra that compensates for a loss caused by bleed-out over time. In this case, however, there arise problems of reduction in the surface characteristics, such as abrasion resistance or stain resistance, of the surface protection layer attributed to the excessive addition of the ultraviolet absorber. A phenomenon becomes prominent, for example, appearance degradation such as surface white turbidity caused by the ultraviolet absorber bleeding out. Therefore, it is virtually difficult to adopt such design. If the bleed-out of an ultraviolet absorber can be suppressed, excellent weather resistance cannot be imparted to decorative materials when the absorption wavelength band of the ultraviolet absorber and an absorbance at each absorption wavelength are incompatible for each layer such as a base material layer or a transparent resin layer. It has been revealed that mere suppression of bleed-out does not produce excellent weather resistance.

Even if two types of absorbances (absorbance $A_{11}$ and absorbance $A_{12}$) are defined, absorbance $A_{11}$ of 0.1 or less or absorbance $A_{12}$ of 0.3 or less fails to sufficiently suppress time-dependent degradation caused by ultraviolet ray as to the decorative sheet having a layer constituted by a resin composition comprising a resin having an ultraviolet absorption wavelength at least at 360 to 380 nm.

Both the absorbance $A_{11}$ and the absorbance $A_{12}$ defined in the present invention are absorbances for ultraviolet ray at wavelengths from 360 to 380 nm. A feature of the present invention is to define the wavelengths of ultraviolet ray to be absorbed and to allocate absorbances at the wavelengths between specific constituent layers at a specific ratio.

As already mentioned, it has been revealed that decorative sheets having a layer comprising a resin having an ultraviolet absorption wavelength at least at 360 to 380 nm, such as polypropylene resin or polyvinyl chloride resin, frequently have the disadvantage that the decorative sheets cannot suppress time-dependent degradation caused by ultraviolet ray. For example, polypropylene resin has strong absorption at or near wavelengths of 310 nm, 330 nm and 370 nm. Polyvinyl chloride resin has strong absorption at or near wavelengths from 320 to 330 nm and from 360 to 370 nm. Thus, such resins have strong absorption at least at wavelengths from 360 to 380 nm. Hence, the disadvantage described above is caused probably because photons, particularly, at wavelengths from 360 to 380 nm, contribute to the degradation of the resins.

The present invention focuses on two types of absorbances (absorbance $A_{11}$ and absorbance $A_{12}$) as to ultraviolet ray at wavelengths from 360 to 380 nm that have high energy (photon) among absorption wavelengths and tend to be directly connected to the degradation of resins, and enables a decorative sheet having a layer comprising a resin having an ultraviolet absorption wavelength at least at 360 to 380 nm, such as polypropylene resin or polyvinyl chloride resin, to suppress time-dependent degradation caused by ultraviolet ray and to have excellent weather resistance by setting the two types of absorbances (absorbance $A_{11}$ and absorbance $A_{12}$) to specific ranges.

The absorbance An requires being more than 0.1, as described above. The absorbance $A_{11}$ is preferably 0.2 or more in consideration of improvement in weather resistance and is also preferably 3.0 or less, more preferably 2.0 or less, further preferably 1.5 or less, in consideration of the suppression of bleed-out, the suppression of reduction in the surface characteristics, such as abrasion resistance, of the surface protection layer, the processing suitability of the decorative sheet, etc.

The absorbance $A_{12}$ requires being more than 0.3, as described above, and is preferably 0.4 or more, more preferably 0.5 or more, in consideration of improvement in weather resistance. The upper limit of the absorbance $A_{12}$ is not particularly limited and is preferably 5.0 or less, more preferably 3.5 or less, further preferably 2.0 or less, in consideration of weather resistance as well as the suppression of bleed-out.

The absorbance $A_{11}$ and the absorbance $A_{12}$ can be adjusted by the type of an ultraviolet absorber, its content, the thickness of a layer containing the ultraviolet absorber, etc.

When the absorbance An and the absorbance $A_{12}$ fall within the ranges described above and their ratio in the thickness direction, i.e., the absorbances in the thickness direction, are optimized, both the characteristics of the decorative sheet, i.e., improvement in weather resistance and the suppression of bleed-out, which tend to contradict each other, can be balanced and achieved at higher levels. From such a viewpoint, the ratio of the absorbance $A_{11}$ to the absorbance $A_{12}$ (absorbance An/absorbance $A_{12}$) is preferably 0.30 or more and 0.85 or less.

In the present invention, when the ratio of the absorbance $A_{11}$ to the absorbance $A_{12}$ (absorbance $A_{11}$/absorbance $A_{12}$) is 0.3 or more, the content of an ultraviolet absorber in the surface protection layer 110 is relatively increased. Therefore, the degradation, caused by ultraviolet ray, of each layer such as a transparent resin layer 120, an adhesive layer A 130, a decoration layer 140, or a base material layer 150 can be more suppressed. On the other hand, when the ratio is 0.85 or less, the content of an ultraviolet absorber in the surface protection layer 110 is relatively decreased. Therefore, bleed-out can be more suppressed. Thus, the ratio of 0.30 or more and 0.85 or less enables improvement in weather resistance and the suppression of bleed-out to be achieved at higher levels. From such a viewpoint, the ratio is more preferably 0.35 or more, further preferably 0.40 or more, and the upper limit is more preferably 0.80 or less.

The absorbance $A_{12}$ is an average value of absorbances, measured at wavelengths from 360 to 380 nm, of a laminate of the surface protection layer 110 formed on the transparent resin layer 120, in accordance with JIS K0115: 2004.

The absorbance $A_{11}$ of the surface protection layer 110 is obtained according to the equation given below in which an average value of absorbances, measured at wavelengths from 360 to 380 nm, of the transparent resin layer 120, in accordance with JIS K0115: 2004 is defined as $A_{10}$; and the absorbance $A_{10}$ is subtracted from the absorbance $A_{12}$. The average value of absorbances is defined as an average value of absorbances measured at 1-nm intervals at wavelengths from 360 to 380 nm (a total of 21 absorbances).

$$\text{Absorbance } A_{11} = \text{Absorbance } A_{12} - \text{Absorbance } A_{10}$$

When samples for measurement of a single layer of the surface protection layer 110 constituting the decorative sheet 100 and a two-layer laminate of the surface protection layer 110 and the transparent resin layer 120 are obtained in the measurement of the absorbance of each layer (single layer or laminate) at wavelengths from 360 to 380 nm, each of the absorbance $A_{11}$ and the absorbance $A_{12}$ can be directly determined by measuring the absorbances of the single layer and the laminate.

When a single layer of the surface protection layer 110 and a two-layer laminate of the surface protection layer 110 and the transparent resin layer 120 are separable from the laminate constituting the decorative sheet 100, without changing the ultraviolet absorption characteristics of each layer, each of the absorbance $A_{11}$ and the absorbance $A_{12}$ can also be directly determined by measuring the absorbances of the single layer and the laminate separated from the decorative sheet.

In the decorative sheet of the present invention, absorbance $A_{21}$ of the surface protection layer at a wavelength of 310 nm (hereinafter, also simply referred to as "absorbance $A_{21}$") measured in accordance with JIS K0115: 2004 is preferably 0.8 or more.

Larger absorbance $A_{21}$ means that less light (ultraviolet ray) at a wavelength of 310 nm reaches the transparent resin layer positioned on the side close to the surface protection layer. As described above, the polypropylene resin and the polyvinyl chloride resin listed as examples of the resin having an ultraviolet absorption wavelength at least at 360 to 380 nm have an absorption wavelength at 310 nm and at 320 nm, respectively, i.e., at or near a wavelength of 310 nm (in the present specification, the term "near" means falling within the range of ±10 nm). Therefore, time-dependent degradation caused by ultraviolet ray might progress by the arrival of light (ultraviolet ray) at or near a wavelength of 310 nm. Accordingly, when the absorbance $A_{21}$ is 0.8 or more, time-dependent degradation caused by ultraviolet ray can be more suppressed and weather resistance can be improved. The absorbance $A_{21}$ is preferably 4.0 or less, more preferably 3.0 or less, further preferably 1.5 or less, in consideration of improvement in weather resistance as well as the suppression of bleed-out, the suppression of reduction in the surface characteristics, such as abrasion resistance, of the surface protection layer, the processing suitability of the decorative sheet, etc.

In the decorative sheet of the present invention, absorbance $A_{22}$ of the transparent resin layer and the surface protection layer at a wavelength of 310 nm (hereinafter, also simply referred to as "absorbance $A_{22}$") measured in accordance with JIS K0115: 2004 is preferably 1.1 or more.

Larger absorbance $A_{22}$ means that less light (ultraviolet ray) at a wavelength of 310 nm reaches the base material layer positioned on the side distant from the surface protection layer. Specifically, weather resistance can be improved by setting the absorbance $A_{22}$ to 1.1 or more. The absorbance $A_{22}$ is preferably 5.0 or less, more preferably 3.5 or less, further preferably 2.0 or less, in consideration of improvement in weather resistance as well as the suppression of bleed-out.

The absorbance $A_{22}$ is obtained by measuring the absorbance, at a wavelength of 310 nm, of a laminate of the surface protection layer formed on the transparent resin layer, in accordance with JIS K0115: 2004.

The absorbance $A_{21}$ is obtained by measuring absorbance $A_{20}$ of the transparent resin layer at a wavelength of 310 nm in accordance with JIS K0115: 2004, and subtracting the absorbance $A_{20}$ from the absorbance $A_{22}$ (Absorbance $A_{21}$ = Absorbance $A_{22}$ - Absorbance $A_{20}$).

When a sample for absorbance measurement of each constituent layer (single layer or laminate) at a wavelength of 310 nm can be provided, the method for measuring the absorbance is the same as that for measuring the absorbance of a single layer or a laminate at wavelengths from 360 to 380 nm as described above.

<Surface protection layer>

The surface protection layer is a layer positioned on a face of the transparent resin layer on the side opposite to the base material layer. The surface protection layer may be formed from a single layer or may be formed from two or more layers such as a top coat layer and a primer layer as shown in Fig. 1. In this context, in the present specification, the "top coat layer" means a layer most distant (also referred to as an "outermost surface layer") from the transparent resin layer, in the surface protection layer. Specifically, when the surface protection layer is formed from a single layer, the surface protection layer has a single-layer structure based on the top coat layer. When the surface protection layer is formed from two or more layers, a layer positioned between the top coat layer and the transparent resin layer means a layer other than the top coat layer among layers constituting the surface protection layer. The primer layer shown in Fig. 1 serves as the layer other than the top coat layer.

Examples of the surface protection layer include a top coat layer which typically imparts surface characteristics to the decorative sheet, and a primer layer which is established for improvement in close contact with the transparent resin layer disposed in contact with the surface protection layer, as shown in Fig. 1. These layers are preferably constituted by a resin composition comprising a resin, from the viewpoint of easy formation, etc., and more preferably constituted by a resin composition further comprising weathering agents such as an ultraviolet absorber and a light stabilizer, in consideration of the surface protection layer being the first layer on which ultraviolet ray is incident among the layers constituting the decorative sheet.

(Ultraviolet absorber)

When the surface protection layer is formed from two or more layers, at least the outermost surface layer, i.e., the top coat layer, preferably contains an ultraviolet absorber. More preferably, all the layers constituting the surface protection layer contain an ultraviolet absorber.

Examples of the ultraviolet absorber preferably include benzotriazole ultraviolet absorbers, benzophenone ultraviolet absorbers, and triazine ultraviolet absorbers. A triazine ultraviolet absorber is more preferred. The triazine ultraviolet absorber is preferably a hydroxyphenyltriazine ultraviolet absorber from the viewpoint of suppressing bleed-out and improving weather resistance.

The ultraviolet absorber is preferably an ultraviolet absorber having absorption performance at or near wavelengths from 360 to 380 nm, or an ultraviolet absorber having absorption performance at or near a wavelength of 310 nm. Use of the ultraviolet absorber having such absorption performance more efficiently attains absorbance $A_{11}$ of more than 0.1 and absorbance $A_{12}$ of more than 0.3 and more easily attains absorbance $A_{21}$ of 0.8 or more and absorbance $A_{22}$ of 1.1 or more. From a viewpoint similar thereto, it is preferred to use an ultraviolet absorber having absorption performance at least at or near wavelengths from 360 to 380 nm, and it is more preferred to use an ultraviolet absorber having absorption performance at or near wavelengths from 360 to 380 nm, and an ultraviolet absorber having absorption performance at or near a wavelength of 310 nm in combination.

Also, an ultraviolet absorber having a reactive functional group such as a (meth)acryloyl group, a vinyl group, or an allyl group is preferred because bleed-out is easily suppressed.

The content of the ultraviolet absorber in the surface protection layer is not particularly limited as long as absorbance $A_{11}$ of more than 0.1 and absorbance $A_{12}$ of more than 0.3 are feasible.

The content of the ultraviolet absorber in the top coat layer constituting the surface protection layer is preferably 0.3 parts by mass or more and 15.0 parts by mass or less, more preferably 0.5 parts by mass or more and 12.5 parts by mass or less, further preferably 1.0 part by mass or more and 10.0 parts by mass or less, still further preferably 2.0 parts by mass or more and 5.5 parts by mass or less, with respect to 100 parts by mass of the resin constituting the top coat layer in consideration of the obtainment of excellent weather resistance by absorbance $A_{11}$ of more than 0.1 and absorbance $A_{12}$ of more than 0.3, and also the suppression of bleed-out.

When an additional layer, such as a primer layer, constituting the surface protection layer contains an ultraviolet absorber, a preferred range of the content of the ultraviolet absorber in the additional layer is preferably 0.5 parts by mass or more and 10.0 parts by mass or less, more preferably 1.0 part by mass or more and 9.5 parts by mass or less, further preferably 2.0 parts by mass or more and 9.0 parts by mass or less, still further preferably 5.0 parts by mass or more and 8.5 parts by mass or less, with respect to 100 parts by mass of the resin constituting the additional layer.

(Light stabilizer)

When the surface protection layer is formed from two or more layers, at least the top coat layer preferably contains a light stabilizer. More preferably, all the layers constituting the surface protection layer contain a light stabilizer.

The light stabilizer is preferably a hindered amine light stabilizer.

Examples of the hindered amine light stabilizer include 4-benzoyloxy-2,2,6,6-tetramethylpiperidine, bis(2,2,6,6-tetramethyl-4-piperidyl) sebacate, bis(1,2,2,6,6-pentamethyl-4-piperidyl) sebacate, bis(1-octyloxy-2,2,6,6-tetramethyl-4-piperidinyl) sebacate, bis(1,2,2,6,6-pentamethyl-4-piperidinyl) sebacate, methyl(1,2,2,6,6-pentamethyl-4-piperidinyl) sebacate, 2,4-bis[N-butyl-N-(1-cyclohexyloxy-2,2,6,6-tetramethyl-4-piperidinyl)aminol-6-(2-hydroxyethylamine)-1,3,5-triazine), tetrakis(1,2,2,6,6-pentamethyl-4-piperidyl)-1,2,3,4-butane tetracarboxylate, and bis-(1,2,2,6,6-pentamethyl-4-piperidyl)-2-(3,5-di-t-butyl-4-hydroxy-benzyl)-2-n-butyl malonate. Among them, a hindered amine light stabilizer derived from decanedioic acid (sebacic acid), such as bis(2,2,6,6-tetramethyl-4-piperidyl) sebacate, bis(1,2,2,6,6-pentamethyl-4-piperidyl) sebacate, bis(1-octyloxy-2,2,6,6-tetramethyl-4-piperidinyl) sebacate, bis(1,2,2,6,6-pentamethyl-4-piperidinyl) sebacate, or methyl(1,2,2,6,6-pentamethyl-4-piperidinyl) sebacate, and a hindered amine light stabilizer having a reactive functional group, such as 1,2,2,6,6-pentamethyl-4-piperidinyl (meth)acrylate, are preferred.

Among those described above, a hindered amine light stabilizer having a (meth)acryloyl group, and a light stabilizer having a reactive functional group, such as a vinyl group or an allyl group, other than the (meth)acryloyl group are more preferred because bleed-out is easily suppressed.

The content of the light stabilizer in the top coat layer constituting the surface protection layer is preferably 0.1 parts by mass or more and 10.0 parts by mass or less, more preferably 0.5 parts by mass or more and 8.0 parts by mass or less, further preferably 1 part by mass or more and 6.0 parts by mass or less, still further preferably 1.5 parts by mass or more and 4.0 parts by mass or less, with respect to 100 parts by mass of the resin constituting the top coat layer in consideration of the obtainment of excellent weather resistance by absorbance $A_{11}$ of more than 0.1 and absorbance $A_{12}$ of more than 0.3, and also the suppression of bleed-out.

When an additional layer, such as a primer layer, constituting the surface protection layer contains a light stabilizer, a preferred range of the content of the light stabilizer in the additional layer is the same as that of the content of the light stabilizer in the top coat layer.

(Nanoshelling of ultraviolet absorber and light stabilizer)

The weathering agent, such as the ultraviolet absorber or the light stabilizer, used in the present embodiment may be enclosed in a nanoshell and thereby nanoshelled. Use of the ultraviolet absorber or the light stabilizer enclosed in a nanoshell can homogenize the effect of weather resistance in the layer by improving the dispersion property (compatibility) of the resin with the ultraviolet absorber or the light stabilizer in the surface protection layer, and can also improve mechanical strength. The link between the nanoshell and the resin of the surface protection layer is expected to suppress the bleed-out of the ultraviolet absorber or the light stabilizer. In the present embodiment, only the ultraviolet absorber may be nanoshelled for use, or only the light stabilizer may be nanoshelled for use. Alternatively, both the ultraviolet absorber and the light stabilizer may be nanoshelled for use. Preferably, both the ultraviolet absorber and the light stabilizer are nanoshelled for use from the viewpoint of the suppression of bleed-out.

The "nanoshell" is a "hollow vesicle having a membrane structure closed in a nanosized shell shape".

The average primary particle size of the nanoshell enclosing the ultraviolet absorber or the light stabilizer is less than a visible light wavelength region (380 to 780 nm) and is on the order of 1/2 or less of the visible light wavelengths, i.e., less than 380 nm. More specifically, the average primary particle size is preferably 1 nm or more and less than 380 nm, more preferably 1 to 375 nm, further preferably 5 to 300 nm, still further preferably 10 to 250 nm, particularly preferably 15 to 200 nm.

The average primary particle size is a value calculated by statistical processing from observation images measured under various electron microscopes such as a transmission electron microscope (TEM), a scanning electron microscope (SEM), or a scanning transmission electron microscope (STEM). The calculation by statistical processing is specifically performed, for example, by calculation according to the expression (A) given below when the diameters of 1000 particles randomly selected from SEM images are measured and prepared into histograms of 3-nm segments. Number-average primary particle size $D_{np}$ obtained according to the expression (A) is regarded as the average primary particle size of the present specification.

$$D_{np} = \Sigma n_i d_i / \Sigma n_i \quad (A)$$

$D_{np}$: Number-average primary particle size
$d_i$: ith diameter of a histogram
$n_i$: Frequency

The nanoshell is not particularly limited as long as the nanoshell can enclose the ultraviolet absorber or the light stabilizer. The nanoshell may be a single-layer membrane or may be multiple membranes. A single-layer membrane is preferred from the viewpoint of attaining a smaller average primary particle size and improving a dispersion property (compatibility). Phospholipid is preferred as a material to form the nanoshell. Specifically, the form of the nanoshell is more preferably a single-layer membrane comprising phospholipid.

Examples of the phospholipid include: glycerophospholipid such as phosphatidylcholine, phosphatidylethanolamine, phosphatidylserine, phosphatidic acid, phosphatidylglycerol, phosphatidylinositol, cardiolipin, egg yolk lecithin, hydrogenated egg yolk lecithin, soybean lecithin, and hydrogenated soybean lecithin; and sphingophospholipid such as sphingomyelin, ceramide phosphorylethanolamine, and ceramide phosphorylglycerol. These phospholipids can be used singly or in combination of two or more thereof.

Examples of the approach for enclosing the ultraviolet absorber or the light stabilizer in the nanoshell include a Bangham method, an extrusion method, a hydration method, a surfactant dialysis method, a reverse phase evaporation method, a freezing-thawing method, and a supercritical reverse phase evaporation method.

The Bangham method is a method which involves adding and dissolving phospholipid in a solvent such as chloroform or methanol, then removing the solvent using an evaporator to form a thin membrane comprising the phospholipid, and adding an ultraviolet absorber or a light stabilizer thereto, followed by stirring by high-speed rotation on the order of, for example, 1000 to 2500 rpm using a mixer for hydration and dispersion so that the ultraviolet absorber or the light stabilizer is enclosed in a nanoshell. The extrusion method is a method which involves passing through a filter instead of using the mixer as external perturbation. The hydration method is a method which involves performing mild stirring and dispersion without the use of the mixer in the Bangham method so that the ultraviolet absorber or the light stabilizer is enclosed in a nanoshell. The reverse phase evaporation method is a method which involves dissolving phospholipid in a solvent such as diethyl ether or chloroform, adding an ultraviolet absorber or a light stabilizer (which may be in the state of a liquid dispersion) thereto to form a W/O emulsion, removing the solvent under reduced pressure from the emulsion, and adding water to the residue so that the ultraviolet absorber or the light stabilizer is enclosed in a nanoshell. The freezing-thawing method is a method which involves performing at least any of cooling and heating as external perturbation, and enclosing the ultraviolet absorber or the light stabilizer in a nanoshell by repeating cooling and heating.

The nanoshell can be prepared more reliably and more easily as a single-layer membrane comprising phospholipid by the adoption of the supercritical reverse phase evaporation method. The supercritical reverse phase evaporation method is a method, as described in, for example, JP 2016-137585 A, which involves enclosing a crystal nucleating agent in a nanoshell using carbon dioxide in a supercritical state or under temperature or pressure conditions equal to or more than the critical point. In this context, the carbon dioxide in a supercritical state means carbon dioxide in a supercritical state equal to or more than the critical temperature (30.98°C) and the critical pressure (7.3773 + 0.0030 MPa). The carbon dioxide under temperature or pressure conditions equal to or more than the critical point means carbon dioxide under conditions where only one of the temperature and the pressure exceeds critical conditions.

The supercritical reverse phase evaporation method specifically involves adding water to a mixture of an ultraviolet absorber or a light stabilizer, supercritical carbon dioxide, and phospholipid, stirring the resultant to form an emulsion of the supercritical carbon dioxide and an aqueous phase, and subsequently expanding and evaporating carbon dioxide under reduced pressure for phase inversion so that a nanoshell of the ultraviolet absorber or the light stabilizer surface-covered with a single-layer membrane of the phospholipid is formed to obtain the ultraviolet absorber or the light stabilizer enclosed in the nanoshell. In the case of forming multiple membranes as conventionally practiced, supercritical carbon dioxide can be added to a mixture of an ultraviolet absorber or a light stabilizer, phospholipid, and water in the method described above.

(Nanoshelling of dispersant)

In the present embodiment, the surface protection layer may contain a dispersant enclosed in a nanoshell. The surface protection layer containing the dispersant enclosed in a nanoshell can homogenize the effect of weather resistance in the layer by improving the dispersion property (compatibility) of the resin with the ultraviolet absorber or the light stabilizer in the surface protection layer, and can also improve mechanical strength.

Examples of the dispersant used in the present embodiment include: polymer surfactants having a molecular weight on the order of 10,000 to 500,000, preferably 15,000 to 300,000, more preferably 20,000 to 200,000, such as aliphatic polyvalent polycarboxylic acid, alkylamine polycarboxylate, and poly(meth)acrylic acid; fatty acid metal salts of a metal such as lithium, sodium, potassium, magnesium, calcium, barium, zinc, or aluminum bound with a saturated or unsaturated fatty acid having preferably 10 to 30, more preferably 12 to 28 carbon atoms, such as lauric acid, myristic acid, stearic acid, behenic acid, montanic acid, or ricinoleic acid; silane coupling agents including (meth)acryloxy silane coupling agents such as (meth)acryloxypropyltriethoxysilane and (meth)acryloxypropyltrimethoxysilane, vinyl silane coupling agents such as vinyltriethoxysilane and vinyltrimethoxysilane, epoxy silane coupling agents such as (epoxycyclohexyl)ethyltrimethoxysilane and glycidoxypropyltrimethoxysilane, isocyanato silane coupling agents such as isocyanatopropyltriethoxysilane, and phenyl silane coupling agents such as phenyltrimethoxysilane; titanate coupling agents such as tetrakis[bis(allyloxymethyl)butoxy]titanium, dipropoxy titanium diisostearate, (butoxycarbonylbenzoyloxy)tributoxy titanium, isopropyl titanium triisostearate, dibutoxy-bis(triethanolaminato)titanium, tetrakis(ethylhexyloxy)titanium, and dipropoxy-bis(acetylacetonato)titanium; silicone oils such as dimethyl silicone oil, methylphenyl silicone oil, methyl hydrogen silicone oil, cyclic dimethyl silicone oil, alkyl-modified silicone oil, long-chain alkyl-modified silicone oil, and higher fatty acid-modified silicone oil; waxes including hydrocarbon waxes such as polypropylene wax, polyethylene wax, polypropylene-polyethylene copolymer wax, microcrystalline wax, paraffin wax, Fischer-Tropsch wax, and Sasol wax, and deoxidized waxes such as ester wax of fatty acid carboxylic acid having preferably 10 to 30, more preferably 12 to 24 carbon atoms and dipentaerythritol, carnauba wax, and montan wax; and modified resins of polyolefin resin modified with an organic acid such as maleic acid, sulfonic acid, carboxylic acid, or rosin acid.

Embodiments of the size of the dispersant enclosed in a nanoshell and the material for the nanoshell are the same as the embodiments about the ultraviolet absorber or the light stabilizer enclosed in a nanoshell. The approach for enclosing the dispersant in the nanoshell can adopt the same approach as that for enclosing the ultraviolet absorber or the light stabilizer in the nanoshell.

(Top coat layer and resin to form top coat layer)

The top coat layer preferably comprises a cured product of a curable resin composition from the viewpoint of improving the surface characteristics, such as abrasion resistance, of the decorative sheet.

In the top coat layer, the ratio of the curable resin contained in the curable resin composition to all resin components constituting the top coat layer is preferably 50% by mass or more, more preferably 70% by mass or more, further preferably 90% by mass or more, still further preferably 100% by mass, which means that the top coat layer is a layer composed of a cured product of the curable resin composition comprising the curable resin, from the viewpoint of obtaining much better surface characteristics.

Examples of the curable resin composition include thermosetting resin compositions comprising a thermosetting resin, ionizing radiation curable resin compositions comprising an ionizing radiation curable resin, and mixtures thereof. Among them, an ionizing radiation curable resin composition is preferred from the viewpoint of elevating the cross-link density of the top coat layer and improving surface characteristics such as abrasion resistance, and an electron beam curable resin composition is more preferred from the viewpoint of feasible solvent-free application and easy handling.

The thermosetting resin composition is a composition comprising at least a thermosetting resin and is a resin composition that is cured by heating. Examples of the thermosetting resin include acrylic resin, urethane resin, phenol resin, urea-melamine resin, epoxy resin, unsaturated polyester resin, and silicone resin. In the thermosetting resin composition, such a curable resin is supplemented, if necessary, with a curing agent.

(Ionizing radiation curable resin)

The ionizing radiation curable resin composition is a composition comprising a compound having an ionizing radiation curable functional group (hereinafter, also referred to as an "ionizing radiation curable compound"). The ionizing radiation curable functional group is a group that is cross-linked for curing by irradiation with ionizing radiation. Examples thereof preferably include functional groups having an ethylenic double bond, such as a (meth)acryloyl group, a vinyl group, and an allyl group. The ionizing radiation means electromagnetic wave or charged particle radiation having an energy quantum capable of polymerizing or cross-linking molecules. Usually, ultraviolet ray (UV) or electron beam (EB) is used. The ionizing radiation additionally includes electromagnetic wave such as X ray and γ ray, and charged particle radiation such as α ray and ion line.

Specifically, the ionizing radiation curable compound can be appropriately selected, for use, from among polymerizable monomers and polymerizable oligomers commonly used as conventional ionizing radiation curable resins.

The polymerizable monomer is preferably a (meth)acrylate monomer having a radical polymerizable unsaturated group in the molecule, particularly preferably a polyfunctional (meth)acrylate monomer.

Examples of the polyfunctional (meth)acrylate monomer include (meth)acrylate monomers having two or more ionizing radiation curable functional groups in the molecule and having at least a (meth)acryloyl group as the functional group.

The number of functional groups in the polyfunctional (meth)acrylate monomer is preferably 2 or more and 8 or less, more preferably 2 or more and 6 or less, further preferably 2 or more and 4 or less, still further preferably 2 or more and 3 or less, from the viewpoint of improving weather resistance, and surface characteristics such as abrasion resistance. These polyfunctional (meth)acrylates may be used singly or in combination of two or more thereof.

Examples of the polymerizable oligomer include (meth)acrylate oligomers having two or more ionizing radiation curable functional groups in the molecule and having at least a (meth)acryloyl group as the functional group. Examples thereof include urethane (meth)acrylate oligomers, epoxy (meth)acrylate oligomers, polyester (meth)acrylate oligomers, polyether (meth)acrylate oligomers, polycarbonate (meth)acrylate oligomers, and acrylic (meth)acrylate oligomers.

These polymerizable oligomers may be used singly or in combination of two or more thereof. The polymerizable oligomer is preferably a urethane (meth)acrylate oligomer, an epoxy (meth)acrylate oligomer, a polyester (meth)acrylate oligomer, a polyether (meth)acrylate oligomer, a polycarbonate (meth)acrylate oligomer, or an acrylic (meth)acrylate oligomer, more preferably a urethane (meth)acrylate oligomer or a polycarbonate (meth)acrylate oligomer, further preferably a urethane (meth)acrylate oligomer, from the viewpoint of improving processing characteristics, abrasion resistance and weather resistance.

The number of functional groups in such a polymerizable oligomer is preferably 2 or more and 8 or less ,the upper limit is more preferably 6 or less, further preferably 4 or less, still further preferably 3 or less from the viewpoint of improving processing characteristics, abrasion resistance and weather resistance..

The weight-average molecular weight of such a polymerizable oligomer is preferably 2,500 or larger and 7,500 or smaller, more preferably 3,000 or larger and 7,000 or smaller, further preferably 3,500 or larger and 6,000 or smaller, from the viewpoint of improving processing characteristics, abrasion resistance and weather resistance. In this context, the weight-average molecular weight is an average molecular weight that is measured by GPC analysis and calculated on the basis of standard polystyrene.

The ionizing radiation curable resin composition can be used in combination with monofunctional (meth)acrylate for the purpose of, for example, decreasing the viscosity of the ionizing radiation curable resin composition. Such monofunctional (meth)acrylates may be used singly or in combination of two or more thereof.

The thickness of the top coat layer is preferably 1.5 $\mu$m or larger and 20 $\mu$m or smaller, more preferably 2 $\mu$m or larger and 15 $\mu$m or smaller, further preferably 3 $\mu$m or larger and 10 $\mu$m or smaller, from the viewpoint of the balance among processing characteristics, abrasion resistance and weather resistance.

(Primer layer and resin to form primer layer)

The decorative sheet of the present invention preferably has a primer layer, in addition to the top coat layer, on the transparent resin layer side relative to the top coat layer in the surface protection layer. The primer layer can improve the close contact between the top coat layer and the transparent resin layer.

The primer layer is a layer that is preferably constituted by at least a binder resin and may further contain a weathering agent such as an ultraviolet absorber or a light stabilizer, if necessary. The primer layer is preferably constituted by a resin composition comprising at least a binder resin and is preferably a layer formed from a resin composition further comprising a weathering agent such as an ultraviolet absorber or a light stabilizer.

Examples of the binder resin preferably include resins such as urethane resin, acrylic polyol resin, acrylic resin, ester resin, amide resin, butyral resin, styrene resin, urethane-acrylic copolymers, polycarbonate urethane-acrylic copolymers (urethane-acrylic copolymers derived from a polymer (polycarbonate polyol) having a carbonate bond in the polymer backbone and having two or more hydroxy groups at an end and/or a side chain), vinyl chloride-vinyl acetate copolymer resin, vinyl chloride-vinyl acetate-acrylic copolymer resin, chlorinated propylene resin, nitrocellulose resin (soluble nitrocellulose), and cellulose acetate resin. These resins can be used singly or in combination of two or more thereof. For example, a mixture of a polycarbonate urethane-acrylic copolymer and acrylic polyol resin can be used as the binder resin.

The thickness of the primer layer is preferably 1 $\mu$m or larger and 10 $\mu$m or smaller, more preferably 2 $\mu$m or larger and 8 $\mu$m or smaller, further preferably 3 $\mu$m or larger and 6 $\mu$m or smaller.

The resin constituting the surface protection layer is preferably substantially free from olefin resin such as polypropylene resin, and polyvinyl chloride resin. In the present invention, light (ultraviolet ray) at wavelengths from 360 to 380 nm, preferably a wavelength of 310 nm, reaching the transparent resin layer is sufficiently limited by defining absorbance $A_{11}$, preferably absorbance $A_{21}$, which is an absorbance for the surface protection layer. However, light (ultraviolet ray) at wavelengths from 360 to 380 nm, and a wavelength of 310 nm reaches the surface protection layer itself in a larger amount than that for the transparent resin layer. Hence, the resin constituting the surface protection layer, substantially free from olefin resin and polyvinyl chloride resin is preferred because the surface protection layer easily has much better weather resistance.

The phrase "substantially free from olefin resin and polyvinyl chloride resin" means that the respective ratios of the olefin resin and the polyvinyl chloride resin to all resin components constituting the surface protection layer are 1% by mass or less, preferably 0.1% by mass or less, more preferably 0.01% by mass or less, further preferably 0% by mass.

<Transparent resin layer>

The transparent resin layer is a layer disposed between the surface protection layer and the base material layer, and is a layer that imparts performance such as weather resistance, surface characteristics (e.g., abrasion resistance), and processing suitability to the decorative sheet of the present invention. When the decorative sheet of the present invention has a decoration layer mentioned later, the transparent resin layer disposed between the decoration layer and the surface protection layer also has a function of protecting the decoration layer.

In the decorative sheet of the present invention, at least one of the transparent resin layer and the base material layer is constituted by a resin composition comprising a resin having an ultraviolet absorption wavelength at least at 360 to 380 nm. Accordingly, examples of the resin contained in the resin composition constituting the transparent resin layer preferably include resins having an ultraviolet absorption wavelength at least at 360 to 380 nm.

The content of the resin having an ultraviolet absorption wavelength at least at 360 to 380 nm in the transparent resin layer is preferably 50% by mass or more, more preferably 70% by mass or more, further preferably 90% by mass or more, still further preferably 100% by mass, with respect to all resin components of the transparent resin layer from the viewpoint of mechanical strength, processing suitability, etc.

Examples of the resin having an ultraviolet absorption wavelength at least at 360 to 380 nm preferably include polypropylene resin and polyvinyl chloride resin. These resins can be used singly or in combination of two or more thereof. In the case of forming the top coat layer from an ionizing radiation curable resin composition, polypropylene resin is more preferred from the viewpoint of suppressing resin degradation and improving weather resistance. As mentioned later, the water vapor transmission rate of the decorative sheet easily falls within a predetermined range by the adoption of polypropylene resin or polyvinyl chloride resin. Therefore, construction suitability as well as long-term close contact can also be improved.

Examples of the polyolefin resin more specifically include: homopolymers of olefins such as ethylene, propylene, and butene; various copolymers such as ethylene-propylene block copolymers and random copolymers; copolymers of at least one of ethylene and propylene with at least one additional olefin such as butene, pentene, or hexene; and copolymers of at least one of ethylene and propylene with at least one additional monomer such as vinyl acetate or vinyl alcohol.

Among them, polyethylene resin containing ethylene as a constituent unit or polypropylene resin containing propylene as a constituent unit is preferred, and polypropylene resin is more preferred, from the viewpoint that a water vapor transmission rate mentioned later easily falls within a predetermined range and from the viewpoint of improving construction suitability as well as long-term close contact.

The polypropylene resin may be a homopolymer of propylene, i.e., polypropylene, or may be a copolymer of propylene with an additional comonomer (e.g., $\alpha$-olefin such as ethylene, 1-butene, 1-hexene, and 1-octene; and vinyl acetate and vinyl alcohol) copolymerizable with propylene. These polypropylene resins may be used singly or may be used in combination of two or more thereof.

In the case of using a homopolymer of propylene (polypropylene), the water vapor transmission rate of the transparent resin layer can be adjusted by the adjustment of the degree of crystallinity. In general, the water vapor transmission rate of polypropylene resin tends to be decreased as the degree of crystallinity is elevated. In the case of using the above polypropylene resin having a thickness in the range of 40 $\mu$m or larger and 200 $\mu$m or smaller as the transparent resin layer, its degree of crystallinity is preferably 30% or more, more preferably 40% or more. The upper limit is preferably 80% or less, more preferably 70% or less.

In the case of using a homopolymer of propylene (polypropylene), the water vapor transmission rate of the transparent resin layer can also be adjusted by the adjustment of the mass ratio between isotactic polypropylene and atactic polypropylene. In general, the water vapor transmission rate of the transparent resin layer can be decreased by the addition of isotactic polypropylene, as compared with the case where the ratio of atactic polypropylene in the polypropylene is 100% by mass. In this case, the mass ratio between atactic polypropylene and isotactic polypropylene is preferably 0/100 to 20/80 in consideration of easy adjustment of a water vapor transmission rate.

A homopolymer of a vinyl chloride monomer, i.e., polyvinyl chloride, or a copolymer of a vinyl chloride monomer with a monomer copolymerizable with the vinyl chloride monomer may be used as the vinyl chloride resin.

Examples of the monomer copolymerizable with the vinyl chloride monomer include: vinyl esters such as vinyl acetate and vinyl propionate; acrylic acid esters such as methyl acrylate and butyl acrylate; methacrylic acid esters such as methyl methacrylate and ethyl methacrylate; maleic acid esters such as butyl maleate and diethyl maleate; fumaric acid esters such as dibutyl fumarate and diethyl fumarate; vinyl ethers such as vinyl methyl ether, vinyl butyl ether and vinyl octyl ether; vinyl cyanides such as acrylonitrile and methacrylonitrile; olefins such as ethylene, propylene, butylene, and styrene; dienes such as isoprene and butadiene; vinylidene halides and vinyl halides, other than vinyl chloride, such as vinylidene chloride and vinyl bromide; and allyl phthalates such as diallyl phthalate. These monomers may be used singly or in combination of two or more thereof.

The average degree of polymerization of the vinyl chloride resin is preferably 500 to 4000, more preferably 700 to 3900, further preferably 1000 to 3800, from the viewpoint that a water vapor transmission rate mentioned later easily falls within a predetermined range and from the viewpoint of improving construction suitability as well as long-term close contact. When the average degree of polymerization falls within the range described above, excellent mechanical strength and moldability are also obtained. In the present specification, the average degree of polymerization is an average degree of polymerization measured in accordance with JIS K6721.

In the present embodiment, in the case of using vinyl chloride resin, a plasticizer is preferably added from the viewpoint that a water vapor transmission rate easily falls within the range described above, from the viewpoint of improving construction suitability as well as long-term close contact, and from the viewpoint of improving workability.

The plasticizer is not particularly limited as long as the plasticizer has compatibility with the vinyl chloride resin. Examples thereof include: phthalic acid plasticizers such as dibutyl phthalate (DBP), dioctyl phthalate (DOP), diisononyl phthalate (DINP), diisodecyl phthalate (DIDP), and diundecyl phthalate (DUP); adipic acid plasticizers such as dibutyl adipate; phosphoric acid plasticizers such as tributyl phosphate, tricresyl phosphate, and triphenyl phosphate; trimellitic acid plasticizers such as tributyl trimellitate and trioctyl trimellitate; various known polyester plasticizers such as adipic acid polyester; and citric acid esters such as acetyl tributyl citrate and acetyl trioctyl citrate. Among them, a phthalic acid plasticizer, an adipic acid plasticizer, and a polyester plasticizer are preferred, and a phthalic acid plasticizer and a polyester plasticizer are more preferred, from the viewpoint that a water vapor transmission rate easily falls within the range described above, from the viewpoint of improving construction suitability as well as long-term close contact, and from the viewpoint of improving workability. These plasticizers may be used singly or in combination of two or more thereof.

The content of the plasticizer can be appropriately adjusted, for use, according to the desired water vapor transmission rate, and cannot be generalized. Usually, the water vapor transmission rate of the vinyl chloride resin tends to be increased as the amount of the plasticizer added is increased. In consideration of this, the content is preferably 15 parts by mass or more, more preferably 20 parts by mass or more, further preferably 25 parts by mass or more,, the upper limit is preferably 50 parts by mass or less, more preferably 45 parts by mass or less, further preferably 35 parts by mass or less ,with respect to 100 parts by mass of the vinyl chloride resin.. When the content of the plasticizer falls within the range described above, a water vapor transmission rate is easily adjusted to the desired range and construction suitability as well as long-term close contact can be improved. When the content of the plasticizer is 20 parts by mass or more, the vinyl chloride resin is softened so that workability can be improved. On the other hand, when the content is 50 parts by mass or less, the bleed-out of the plasticizer is suppressed. Thus, a water vapor transmission rate is easily adjusted to the desired range stably, and construction suitability as well as long-term close contact can be improved.

In the case of using, for example, a phthalic acid ester plasticizer, its content is preferably 25 parts by mass or more, more preferably 30 parts by mass or more, further preferably 35 parts by mass or more, the upper limit is preferably 50 parts by mass or less, more preferably 45 parts by mass or less, further preferably 40 parts by mass or less, with respect to 100 parts by mass of the vinyl chloride resin, particularly, from the viewpoint that a water vapor transmission rate easily falls within the desired range and from the viewpoint of improving construction suitability as well as long-term close contact. In the case of using a polyester plasticizer, its content is preferably 15 parts by mass or more, more preferably 18 parts by mass or more, further preferably 20 parts by mass or more, with respect to 100 parts by mass of the vinyl chloride resin. The upper limit is preferably 35 parts by mass or less, more preferably 30 parts by mass or less, further preferably 25 parts by mass or less.

The resin constituting the transparent resin layer may be used in combination with an additional resin, in addition to the resin having an ultraviolet absorption wavelength at least at 360 to 380 nm. Examples of the additional resin include resins containing polyolefin, such as polyethylene (low-density, medium-density, and high-density), polymethylpentene, polybutene, ethylene-vinyl acetate copolymers, and ethylene-acrylic acid copolymers, and thermoplastic resins such as polyester resin, polycarbonate resin, acrylonitrile-butadiene-styrene resin (hereinafter, also referred to as "ABS resin"), and acrylic resin.

In the decorative sheet of the present invention, at least one of the base material layer and the transparent resin layer can be constituted by a resin composition comprising a resin having an ultraviolet absorption wavelength at least at 360 to 380 nm. Therefore, the transparent resin layer may not be constituted by the resin composition comprising the resin and may be constituted by, for example, a resin composition comprising the additional resin, as long as the base material layer, for example, is constituted by the resin composition comprising the resin.

In this case, the additional resin is preferably a resin containing polyolefin, such as polyethylene (low-density, medium-density, and high-density), polymethylpentene, polybutene, an ethylene-vinyl acetate copolymer, or an ethylene-acrylic acid copolymer, more preferably polyethylene (low-density, medium-density, and high-density). This is because the water vapor transmission rate of the decorative sheet mentioned later easily falls within a predetermined range, and therefore, construction suitability as well as long-term close contact can be improved.

More specifically, the polyethylene resin may be a homopolymer of ethylene, i.e., polyethylene, or may be a copolymer of ethylene with an additional comonomer (e.g., $\alpha$-olefin such as propylene, 1-butene, 1-hexene, and 1-octene; and vinyl acetate and vinyl alcohol) copolymerizable with ethylene. Examples of the polyethylene include high-density polyethylene (HDPE), medium-density polyethylene (MDPE), low-density polyethylene (LDPE) as well as linear low-density polyethylene (LLDPE), very low-density polyethylene (VLDPE), ultrahigh-molecular-weight polyethylene (UHMWPE), and cross-linked polyethylene (PEX). These polyethylene resins may be used singly or may be used in combination of two or more thereof.

The transparent resin layer preferably contains a weathering agent such as an ultraviolet absorber or a light stabilizer. The transparent resin layer containing such a weathering agent easily attains, particularly, absorbance $A_{12}$ of more than 0.3, by combination with the surface protection layer and easily attains absorbance $A_{22}$ of 1.1 or more.

Therefore, weather resistance is improved. As described above, the transparent resin layer is preferably constituted by a resin composition comprising a resin having an ultraviolet absorption wavelength at least at 360 to 380 nm, and is a layer capable of absorbing ultraviolet ray owing to the resin. However, resin degradation progresses by the ultraviolet absorption owing to the resin. Accordingly, these weathering agents contained therein can improve weather resistance and suppress resin degradation.

Examples of the weathering agent such as an ultraviolet absorber or a light stabilizer preferably include those listed as examples of the weathering agent such as an ultraviolet absorber or a light stabilizer that may be used in the surface protection layer.

The content of the ultraviolet absorber in the transparent resin layer is not particularly limited as long as absorbance $A_{12}$ of more than 0.3 is feasible. The content is preferably 0.03 parts by mass or more and 10.0 parts by mass or less, more preferably 0.05 parts by mass or more and 3.0 parts by mass or less, further preferably 0.07 parts by mass or more and 1.0 part by mass or less, still further preferably 0.10 parts by mass or more and 0.4 parts by mass or less, with respect to 100 parts by mass of the resin constituting the transparent resin layer from the viewpoint of obtaining excellent weather resistance by absorbance $A_{12}$ of more than 0.3, preferably absorbance $A_{22}$ of 1.1 or more.

From a viewpoint similar thereto, the content of the light stabilizer in the transparent resin layer is preferably 0.1 parts by mass or more and 10.0 parts by mass or less, more preferably 0.5 parts by mass or more and 8.0 parts by mass or less, further preferably 1 part by mass or more and 5.0 parts by mass or less, still further preferably 1.5 parts by mass or more and 3.0 parts by mass or less, with respect to 100 parts by mass of the resin constituting the transparent resin layer.

The transparent resin layer can be transparent to an extent that the base material layer side relative to the transparent resin layer can be viewed. The transparent resin layer may be clear, colorless or may be colored transparent or translucent. Specifically, in the present invention, the "transparency" is meant to include a clear, colorless state as well as a colored transparent state and a translucent state.

The thickness of the transparent resin layer is preferably 20 $\mu$m or larger and 150 $\mu$m or smaller, more preferably 40 $\mu$m or larger and 120 $\mu$m or smaller, further preferably 60 $\mu$m or larger and 100 $\mu$m or smaller, from the viewpoint of the balance among abrasion resistance, processing suitability and weather resistance.

The transparent resin layer is preferably thicker than the base material layer from the viewpoint of protecting a decoration layer and obtaining excellent weather resistance, and surface characteristics such as abrasion resistance.

<Base material layer>

The base material layer is a layer disposed on the side of the transparent resin layer opposite to the surface protection layer, and is a layer that imparts performance such as mechanical strength and processing suitability to the decorative sheet of the present invention.

In the decorative sheet of the present invention, at least one of the transparent resin layer and the base material layer is constituted by a resin composition comprising a resin having an ultraviolet absorption wavelength at least at 360 to 380 nm. Accordingly, examples of the resin contained in the resin composition constituting the base material layer preferably include resins having an ultraviolet absorption wavelength at least at 360 to 380 nm.

The content of the resin having an ultraviolet absorption wavelength at least at 360 to 380 nm in the base material layer is preferably 50% by mass or more, more preferably 70% by mass or more, further preferably 90% by mass or more, still further preferably 100% by mass, with respect to all resin components of the base material layer from the viewpoint of mechanical strength, processing suitability, etc.

Examples of the resin having an ultraviolet absorption wavelength at least at 360 to 380 nm for use in the base material layer preferably include those listed as examples of the resin having an ultraviolet absorption wavelength at least at 360 to 380 nm that may be used in the transparent resin layer. Specifically, the resin for use in the base material layer is preferably polyolefin resin or vinyl chloride resin. These resins can be selected from the same resins as those described as the resin that may be used in the transparent resin layer. The adoption of the resin that may be used in the transparent resin layer as the resin for use in the base material layer can suppress time-dependent degradation caused by ultraviolet ray and produces excellent weather resistance. In addition, a water vapor transmission rate easily falls within a predetermined range. Therefore, construction suitability as well as long-term close contact can also be improved.

Examples of the additional resin that may be used in combination with the resin having an ultraviolet absorption wavelength at least at 360 to 380 nm preferably include those listed as examples of the additional resin that may be used in the transparent resin layer.

In the present invention, at least one of the base material layer and the transparent resin layer can be constituted by a resin composition comprising a resin having an ultraviolet absorption wavelength at least at 360 to 380 nm. Therefore, the base material layer may not be constituted by the resin composition comprising the resin and may be constituted by, for example, a resin composition comprising the additional resin, as long as for example, the transparent resin layer is constituted by the resin composition comprising the resin.

The base material layer may be clear, transparent and is preferably colored from the viewpoint of masking the color of an adherend and improving design, at the time of obtaining a decorative material using the decorative sheet.

In the case of coloring the base material layer, a colorant such as a dye or a pigment can be added into the base material layer. A pigment is preferred because fading is easily suppressed.

Examples of the pigment include: white pigments such as zinc oxide, lead white, lithopone, titanium dioxide, precipitated barium sulfate, and baryte; black pigments such as carbon black, iron black, and azomethine azo black pigments; red pigments such as red lead and iron oxide red; yellow pigments such as lead yellow, zinc yellow (zinc yellow type 1 and zinc yellow type 2), isoindolinone yellow, and nickel-azo complexes; and blue pigments such as phthalocyanine blue, cobalt blue, ultramarine blue, and Prussian blue (potassium ferrocyanide).

The content of the colorant is preferably 1 part by mass or more and 50 parts by mass or less, more preferably 3 parts by mass or more and 40 parts by mass or less, further preferably 5 parts by mass or more and 30 parts by mass or less, still further preferably 5 parts by mass or more and 20 parts by mass or less, with respect to 100 parts by mass of the resin constituting the base material layer from the viewpoint of masking the color of an adherend.

An additive may be blended, if necessary, into the base material layer. Examples of the additive include inorganic fillers such as calcium carbonate and clay, flame retardants such as magnesium hydroxide, antioxidants, lubricants, foaming agents, and antioxidants. The amount of the additive blended is not particularly limited without particularly inhibiting processing characteristics, and can be appropriately set according to required characteristics, etc.

In the present invention, absorbance $A_{12}$ of more than 0.3, preferably absorbance $A_{22}$ of 1.1 or more, is defined. Therefore, the weather resistance of the base material layer is improved, and the weather resistance of the whole decorative sheet can also be favorable, even if the base material layer contains neither the ultraviolet absorber nor the light stabilizer. When particularly strict weather resistance is required, a weathering agent such as an ultraviolet absorber or a light stabilizer may be contained therein. Further improvement in weather resistance can be expected. In this case, examples of the weathering agent such as ultraviolet absorber or a light stabilizer preferably include those listed as examples of the weathering agent that may be used in the transparent resin layer. Its content is also the same as that for the transparent resin layer.

The thickness of the base material layer is preferably 20 μm or larger and 150 μm or smaller, more preferably 25 μm or larger and 120 μm or smaller, further preferably 30 μm or larger and 100 μm or smaller, still further preferably 40 μm or larger and 80 μm or smaller, from the viewpoint of the balance among mechanical strength, processing suitability, and design.

The base material layer may be subjected, on its one side or both sides, to surface treatment such as physical surface treatment (e.g., an oxidation method and a concavo-convex formation method) or chemical surface treatment in order to enhance close contact with other layers of the decorative sheet or with an adherend, and a primer layer may be formed thereon.

<Decoration layer>

The decorative sheet of the present invention preferably has a decoration layer at an arbitrary location of the decorative sheet from the viewpoint of improving design. The location where the decoration layer is formed is preferably between the base material layer and the transparent resin layer from the viewpoint of enhancing the weather resistance of the decoration layer.

The decoration layer may be, for example, a colored layer that covers the whole surface (so-called solid colored layer), or may be a picture layer formed by printing various patterns using ink and a printer, or may be a combination thereof.

The pattern conferred by the decoration layer is not particularly limited and can be selected as desired. Examples thereof include patterns such as wood-grain patterns which mimic the appearance of plate surfaces of various trees such as Japanese cedar, Japanese cypress, and pine, marble patterns (e.g., travertine marble patterns), pebble patterns which mimic the surface of rock such as the cleavage plane of granite rock, fabric patterns which mimic the grains of fabrics or cloth-like patterns, leather (leather grain) patterns which express leather grains, tiled patterns, bricked patterns, hairlines, parallel-line grooves, pearskin finish, sand grain patterns, letters, symbols, geometric patterns, and their composite marquetry, patchworks, and block patterns. Examples of their composite patterns include patterns of artificial stone obtained by mixing crushed stones of a stone material such as marble with white cement, solidifying, and polishing the resultant to obtain a finished artificial stone like a marble, i.e., so-called artificial marble.

Although demanders' requests for design vary depending on trends, etc., wood-grain patterns enjoy an enduring popularity. Therefore, wood-grain patterns are one of the preferred patterns as the pattern of the decorative sheet of the present invention. The wood-grain patterns include edge grain patterns, flat grain patterns, figured grain patterns, butt end patterns, and the like, any of which may be used.

The ink for use in the decoration layer is an appropriate mixture of a binder resin with a colorant such as a pigment or a dye, an extender pigment, a solvent, a stabilizer, a plasticizer, a catalyst, a curing agent, and the like. The ink for use in the decoration layer may contain the weathering agent such as an ultraviolet absorber or a light stabilizer from the viewpoint of improvement in weather resistance.

Examples of the binder resin for the decoration layer include, but are not particularly limited to, resins such as urethane resin, acrylic polyol resin, acrylic resin, ester resin, amide resin, butyral resin, styrene resin, urethane-acrylic copolymers, vinyl chloride-vinyl acetate copolymer resin, vinyl chloride-vinyl acetate-acrylic copolymer resin, chlorinated propylene resin, nitrocellulose resin, and cellulose acetate resin. Various types of resins can be used, such as one-part curable resins and two-part curable resins involving a curing agent such as an isocyanate compound.

The colorant is preferably a pigment excellent in masking property and weather resistance. Examples of the pigment include the same as those listed as examples of the pigment for the base material layer.

The content of the colorant in the base material layer is preferably 5 parts by mass or more and 90 parts by mass or less, more preferably 15 parts by mass or more and 80 parts by mass or less, further preferably 30 parts by mass or more and 70 parts by mass or less, with respect to 100 parts by mass of the resin constituting the decoration layer.

The thickness of the decoration layer can be appropriately selected according to the desired picture and is preferably 0.5 $\mu$m or larger and 20 $\mu$m or smaller, more preferably 1 $\mu$m or larger and 10 $\mu$m or smaller, further preferably 2 $\mu$m or larger and 5 $\mu$m or smaller, from the viewpoint of masking the ground color of an adherend and improving design.

<Adhesive layer A>

Adhesive layer A is preferably formed between the base material layer and the transparent resin layer in order to improve the close contact between these layers.

In the case of further having the decoration layer mentioned above between the base material layer and the transparent resin layer, the positional relationship between the adhesive layer A and the decoration layer is not particularly limited. Specifically, the decoration layer and the adhesive layer A may be located in this order from the side closer to the base material layer, or the adhesive layer A and the decoration layer may be located in this order from the side closer to the base material layer.

The adhesive layer A can be constituted by an adhesive, for example, a urethane adhesive, an acrylic adhesive, an epoxy adhesive, or a rubber adhesive. Among these adhesives, a urethane adhesive is preferred from the viewpoint of adhesive power.

Examples of the urethane adhesive include adhesives exploiting two-part curable urethane resins containing various polyol compounds such as polyether polyol, polyester polyol, and acrylic polyol, and curing agents such as various isocyanate compounds.

The thickness of the adhesive layer A is preferably 0.1 $\mu$m or larger and 30 $\mu$m or smaller, more preferably 1 $\mu$m or larger and 15 $\mu$m or smaller, further preferably 2 $\mu$m or larger and 10 $\mu$m or smaller.

(Property of decorative sheet)

The decorative sheet of the present invention preferably has a water vapor transmission rate of 0.75 g/m$^2\cdot$24 h or more and 45 g/m$^2\cdot$24 h or less, in addition to the properties related to the absorbances. The decorative sheet having such a water vapor transmission rate is excellent in construction suitability, long-term close contact and processing suitability.

Specifically, when the water vapor transmission rate of the decorative sheet falls within the range described above, initial adhesion strength in a construction process is improved. Therefore, the separation of an end face of the decorative sheet due to insufficient initial adhesion strength, so-called spring-back, can be prevented in construction. Hence, construction efficiency is improved. On the other hand, in the case of preparing the decorative material via an adhesive layer from a decorative sheet and an adherend mainly the degradation of the adhesive layer between the decorative sheet and the adherend can be suppressed. Therefore, peeling caused by the degradation is suppressed, and long-term close contact is improved without causing peeling even in long-term use. Specifically, when the water vapor transmission rate of the decorative material of the present invention falls within the specific range, improvement in construction suitability resulting from improved initial adhesion strength in a construction process as well as improvement in long-term close contact without causing peeling even in long-term use can be achieved.

The effects brought about by the water vapor transmission rate that falls within the range described above will be described more specifically. When the water vapor transmission rate is 0.75 g/m$^2\cdot$24 h or more, poor adhesion caused by poor curing of an adhesive used in an adhesive layer is prevented in preparing a decorative material by affixing the decorative sheet to an adherend via the adhesive layer. Therefore, initial adhesion strength is improved, and construction suitability is improved. On the other hand, when the water vapor transmission rate is 45 g/m$^2\cdot$24 h or less, the degradation of the base material caused by the influence of moisture in the atmosphere, the wind and rain, and ultraviolet ray from insolation, and the hydrolytic degradation of the adhesive used in the adhesive layer can be suppressed in long-term use. Therefore, the decorative sheet is less likely to be peeled from the adherend, and long-term close contact is improved without causing peeling even in long-term use. Accordingly, the decorative sheet of the present invention has the water vapor transmission rate that falls within the range described above, and can thereby improve construction suitability based on high initial adhesion strength in a construction process and long-term close contact without causing peeling even in long-term use, at the same time.

The water vapor transmission rate is 1.2 g/m$^2 \cdot$24 h or more, more preferably 1.5 g/m$^2 \cdot$24 h, further preferably 2.5 g/m$^2 \cdot$24 h or more, still further preferably 4.5 g/m$^2 \cdot$24 h or more, the upper limit is preferably 40 g/m$^2 \cdot$24 h or less, more preferably 35 g/m$^2 \cdot$24 h or less, further preferably 30 g/m$^2 \cdot$24 h or less, still further preferably 20 g/m$^2 \cdot$24 h or less, from the viewpoint of improving construction suitability as well as long-term close contact..

In the present invention, the water vapor transmission rate can be adjusted, as mentioned above, mainly by the type of the material constituting the base material layer, or in the case of having a transparent resin layer, the type of the material constituting the resin layer, etc.

<Method for producing decorative sheet>

The decorative sheet of the present invention can be produced by, for example, a production method comprising the steps of: laminating a base material layer with a transparent resin layer; and forming a surface protection layer on the transparent resin layer.

The lamination of the base material layer with the transparent resin layer can be performed by pressure-bonding a resin composition constituting the transparent resin layer onto the base material layer by a method such as extrusion lamination, dry lamination, wet lamination, or thermal lamination. In the case of establishing a decoration layer or adhesive layer A between the base material layer and the transparent resin layer, ink or an adhesive for forming the decoration layer or the adhesive layer A can be applied onto the base material layer by a known method such as a gravure printing method, a bar coating method, a roll coating method, a reverse roll coating method, or a comma coating method, and dried and cured, if necessary, to form the layer.

The surface protection layer can be formed by applying a resin composition constituting the surface protection layer onto the transparent resin layer, and curing the resin composition, if necessary. In the case of using a curable resin composition in the formation of a top coat layer, a cured product can be prepared by curing under conditions appropriate for the property of the curable resin. The top coat layer can be formed by applying the curable resin composition onto the transparent resin layer to form an uncured resin layer, and curing the curable resin composition constituting the uncured resin layer by a predetermined curing method capable of obtaining a cured product. In the case of using, for example, a thermosetting resin, as the curable resin, the top coat layer can be formed by heating the uncured resin layer under appropriate temperature conditions to prepare a cured product.

In the case of using an ionizing radiation curable resin as the curable resin, the top coat layer can be formed by irradiating the uncured resin layer with ionizing radiation such as electron beam or ultraviolet ray to prepare a cured product. In this case, the acceleration voltage of the electron beam used as ionizing radiation can be appropriately selected according to the resin used or the thickness of the layer. Usually, the uncured resin layer is preferably cured at an acceleration voltage on the order of 70 to 300 kV. The irradiation dose is preferably an amount that saturates the cross-link density of the ionizing radiation curable resin, and is selected within the range of usually 5 to 300 kGy (0.5 to 30 Mrad), preferably 10 to 50 kGy (1 to 5 Mrad).

In the case of establishing a primer layer as one of the layers constituting the surface protection layer, a resin composition constituting the primer layer can be applied onto the transparent resin layer by a known method such as a gravure printing method, a bar coating method, a roll coating method, a reverse roll coating method, or a comma coating method, and dried and cured, if necessary, followed by the formation of the top coat layer by the method described above.

A concavo-convex pattern may be imparted to the decorative sheet of the present invention by embossing or the like.

In the case of performing embossing, for example, the decorative sheet is heated to preferably 80°C or higher and 260°C or lower, more preferably 85°C or higher and 160°C or lower, further preferably 100°C or higher and 140°C or lower, and an embossing plate can be pressed against the decorative sheet for embossing. The location against which the embossing plate is pressed is preferably the surface protection layer side of the decorative sheet.

[Decorative material]

The decorative material of the present invention comprises an adherend and the decorative sheet of the present invention described above. Specifically, the adherend and the decorative sheet are laminated such that a face of the adherend requiring decoration and a face of the decorative sheet on the base material layer side are opposed to each other.

Fig. 2 is a cross-sectional view showing an embodiment of a decorative material 200 of the present invention.

The decorative material 200 of Fig. 1 has a decorative sheet 100 of the present invention, an adhesive layer B 210, and an adherend 220 in the presented order. A base material layer 140 of the decorative sheet 100 and the adherend 220 are laminated in an opposed manner via the adhesive layer B 210.

<Adherend>

Examples of the adherend include flat plates made of various materials, boards such as curved plates, three-dimensionally shaped goods, and sheets (or films). Examples thereof include: boards made of various wood such as Japanese cedar, Japanese cypress, pine, and lauan, for example, wood veneer, plywood, laminated wood, particle boards, and wood fiberboards (e.g., MDF (medium-density fiberboard)), and wood members for use as three-dimensionally shaped goods; metal members, such as iron, copper, aluminum, and titanium, for use as boards, steel plates, three-dimensionally shaped goods, or sheets; ceramic members, such as glass, ceramics such as pottery, non-cement ceramic materials such as gypsum, and non-pottery ceramic materials such as ALC (autoclaved lightweight aerated concrete) plates, for use as boards or three-dimensionally shaped goods; and resin members, such as acrylic resin, polyester resin, polystyrene resin, polyolefin resin (e.g., polypropylene), ABS (acrylonitrile-butadiene-styrene copolymer) resin, phenol resin, vinyl chloride resin, cellulose resin, and rubbers, for use as boards, three-dimensionally shaped goods, or sheets. These members can be used singly or in combination of two or more thereof.

The adherend can be appropriately selected from among those described above according to a purpose. At least one member selected from the group consisting of a wood member, a metal member and a resin member is preferred for purposes of building interior members such as walls, ceilings, and floors or exterior members such as exterior walls, roofs, eave ceilings, fences, and gates, and joinery or fixture members such as window frames, doors, railings, baseboards, crown moldings, and covers. At least one member selected from the group consisting of a metal member and a resin member is preferred for purposes of exterior members such as front doors and joinery such as window frames and doors.

The thickness of the adherend can be appropriately selected according to a purpose and a material and is preferably 0.1 mm or larger and 10 mm or smaller, more preferably 0.3 mm or larger and 5 mm, further preferably 0.5 mm or larger and 3 mm or smaller.

<Adhesive layer B>

The adherend and the decorative sheet are preferably laminated via adhesive layer B, i.e., the decorative material of the present invention preferably has the adherend, adhesive layer B and the decorative sheet in the presented order, in order to obtain excellent adhesiveness.

The adhesive for use in the adhesive layer B is not particularly limited, and a known adhesive can be used. Examples thereof preferably include adhesives such as moisture curing adhesives, anaerobic curing adhesives, dry curing adhesives, UV curing adhesives, heat-sensitive adhesives (e.g., hot-melt adhesives), and pressure-sensitive adhesives. A moisture curing adhesive and a heat-sensitive adhesive are preferred in consideration of compatibility with the decorative material of the present embodiment having a predetermined water vapor transmission rate, easy handling, etc. Particularly, the heat-sensitive adhesive is preferred because adhesive power rises up to saturation at the same time with the cooling and solidification of a melted adhesive layer in a liquid state. The moisture curing adhesive, when used in combination with the decorative material of the present embodiment, easily produces the initial adhesion strength of the adhesive used in the adhesive layer because the moisture curing adhesive can come into contact with moderate humidity in a construction process. On the other hand, the moisture curing adhesive suppresses reduction in close contact caused by hydrolytic degradation because the moisture curing adhesive does not come into contact with excessive humidity. As a result, much better construction suitability as well as long-term close contact are easily obtained. The moisture curing adhesive is also preferred from the viewpoint of easy handling, etc.

Examples of the resin for use in the adhesive constituting this adhesive layer include acrylic resin, polyurethane resin, vinyl chloride resin, vinyl acetate resin, vinyl chloride-vinyl acetate copolymer resin, styrene-acrylic copolymer resin, polyester resin, and polyamide resin. These resins can be used singly or in combination of two or more thereof. A two-part curing polyurethane adhesive involving a curing agent such as an isocyanate compound, or a polyester adhesive is also applicable.

Alternatively, an adhesive may be used in the adhesive layer. The adhesive can be appropriately selected, for use, from the group consisting of acrylic, urethane, silicone, and rubber, etc..

A moisture curing adhesive, one of the adhesives preferably used in the present invention, containing urethane resin in the resin system, contains a prepolymer having isocyanate groups at molecular ends, as an essential component. The prepolymer is usually a polyisocyanate prepolymer having one or more isocyanate groups at each of both molecular ends and is in the state of a solid thermoplastic resin at ordinary temperature. Examples of such a polyisocyanate prepolymer include prepolymers obtained using polyester polyol that is a crystalline solid at ordinary temperature as a polyol component and using polyisocyanate consisting of 4,4-diphenylmethane diisocyanate or tolylene diisocyanate, etc. as a polyisocyanate component.

The thickness of the adhesive layer B is not particularly limited and is preferably 1 µm or larger and 100 µm or smaller, more preferably 5 µm or larger and 50 µm or smaller, further preferably 10 µm or larger and 30 µm or smaller, from the viewpoint of obtaining excellent adhesiveness.

<Method for producing decorative material>

The decorative material can be produced through the step of laminating the decorative sheet with an adherend.
This step is the step of laminating the decorative sheet of the present invention with an adherend such that a face of the adherend requiring decoration and a face of the decorative sheet on the base material layer side are opposed to each other. Examples of the method for laminating the decorative sheet with the adherend include a lamination method which involves laminating the decorative sheet to a plate-like adherend via adhesive layer B by applying pressure thereto using a pressure roller.
In the case of using a hot-melt adhesive (heat-sensitive adhesive) as the adhesive, the warming temperature is preferably 160°C or higher and 200°C or lower, though varying depending on the type of the resin constituting the adhesive, and is preferably 100°C or higher and 130°C or lower for a reactive hot-melt adhesive. Vacuum molding is generally performed under heating. Its temperature is preferably 80°C or higher and 130°C or lower, more preferably 90°C or higher and 120°C or lower.
The decorative material thus obtained can be arbitrarily cut, and the surface or a butt end portion can be arbitrarily decorated by grooving, chamfering, or the like using a cutting machine such as a router or a cutter. The decorative material can be used for various purposes, for example, various members such as building interior members such as walls, ceilings, floors, and front doors or exterior members such as exterior walls, roofs, eave ceilings, fences, and gates, joinery or fixture members such as window frames, doors, railings, baseboards, crown moldings, and covers as well as general furniture such as drawers, shelves, and desks, kitchen furniture such as dining tables and sinks, or cabinets for light electrical products or office automation equipment, and vehicle interior and exterior members.

Examples

Next, the present invention will be described in more detail with reference to Examples. However, the present invention is not limited by these examples by any means.

1. Evaluation and measurement

1-1. Absorbance

Absorbance $A_{12}$ at wavelengths from 360 to 380 nm and absorbance $A_{22}$ at a wavelength of 310 nm of a laminate of a surface protection layer formed on a transparent resin layer were measured in accordance with JIS K0115: 2004 using an ultraviolet-visible-near infrared spectrophotometer (manufactured by Hitachi, Ltd., trade name: U-4000). Absorbance $A_{10}$ at wavelengths from 360 to 380 nm and absorbance $A_{20}$ at a wavelength of 310 nm of the transparent resin layer were also measured by the same approach as above. The absorbance $A_{10}$ was subtracted from the absorbance $A_{12}$ to calculate absorbance $A_{11}$ of the surface protection layer at wavelengths from 360 to 380 nm. The absorbance $A_{20}$ was subtracted from the absorbance $A_{22}$ to calculate absorbance $A_{21}$ of the surface protection layer at a wavelength of 310 nm.

1-2. Weather resistance

A decorative sheet obtained in each of Examples and Comparative Examples was irradiated with ultraviolet ray for 20 hours under conditions involving a black panel temperature of 63°C and an illuminance of 100 mW/cm$^2$ using a super-accelerated weather resistance testing apparatus given below, and then condensed for 4 hours. This cycle was repeated. After a lapse of 800 hours, the appearance of the decorative sheet was visually evaluated according to criteria given below.

<Super-accelerated weather resistance testing apparatus>

A super-accelerated weather resistance testing apparatus (trade name: EYE Super UV Tester SUV-W161, manufactured by Iwasaki Electric Co., Ltd.) equipped with a UV lamp (trade name: M04-L21WB/SUV, manufactured by Iwasaki Electric Co., Ltd.), a lamp jacket (trade name: WJ50-SUV, manufactured by Iwasaki Electric Co., Ltd.) and an illuminance meter (trade name: UVD-365PD, manufactured by Iwasaki Electric Co., Ltd.).

<Evaluation criteria>

A: No appearance change was confirmed in the whole decorative sheet.
B: Although slight whitening was confirmed in the appearance of the decorative sheet, no color change was able to be confirmed in at least one of the transparent resin layer and the base material layer.
C: Slight whitening was confirmed in the appearance of the decorative sheet, and slight color change was also confirmed in at least one of the transparent resin layer and the base material layer.
D: Marked whitening in the appearance of the decorative sheet and significant color change in at least one of the transparent resin layer and the base material layer were confirmed.

1-3. Measurement of water vapor transmission rate

The water vapor transmission rate of a decorative sheet obtained in each of Examples and Comparative Examples was measured in accordance with Testing Methods for Determination of the Water Vapor Transmission Rate of Moisture-Proof Packaging Materials (Dish Method) stipulated by JIS Z0208: 1976.

1-4. Evaluation of construction suitability

A decorative sheet obtained in each of Examples and Comparative Examples was affixed to a flat plate-like adherend having a width of 25 mm (material: polyvinyl chloride (PVC)) via an adhesive layer having a thickness of 50 $\mu$m prepared by melting a moisture curing and hot-melt urethane resin adhesive (polyurethane prepolymer having isocyanate groups in the molecule, "1308.20 (trade name)", manufactured by TAKA) at 120°C. The adhesive layer was cooled and solidified at room temperature (23°C) and left for 1 hour in an environment of 90°C to prepare a sample. A peeling test was conducted in a temperature environment of 25°C under conditions involving a tensile rate of 10 mm/min, a peeling direction of 90°, and a chuck distance of 30 mm using Tensilon Universal Material Testing Instrument ("Tensilon RTC-1250A (trade name)", manufactured by Orientec Co., Ltd.). Peeling strength was measured as initial adhesion strength and evaluated according to criteria given below. A sample given a score of B or higher passed the evaluation of construction suitability.

A: The peeling strength was 1.0 N/mm or more.
B: The peeling strength was 0.5 N/mm or more and less than 1.0 N/mm.
C: The peeling strength was less than 0.5 N/mm.

1-5. Evaluation of long-term close contact

The sample prepared in the preceding section "1-4. Evaluation of construction suitability" was left for 6 weeks in a hot and humid environment of 70°C and 90% RH. Then, a peeling test was conducted in a temperature environment of 25°C under conditions involving a tensile rate of 50 mm/min and a peeling direction of 90° using Tensilon Universal Material Testing Instrument ("Tensilon RTC-1250A (trade name)", manufactured by Orientec Co., Ltd.). Peeling strength was measured and evaluated according to criteria given below. A sample given a score of B or higher passed the evaluation of long-term close contact.

A: The peeling strength was 2.0 N/mm or more.
B: The peeling strength was 1.0 N/mm or more and less than 2.0 N/mm.
C: The peeling strength was less than 1.0 N/mm.

1-6. Processing suitability

Uplift of the decorative material was visually confirmed in a bent portion (bending angle: 1 mmR) during affixing (lamination) in the preparation of a sample in the preceding section "1-4. Evaluation of construction suitability" and evaluated according to criteria given below. A sample given a score of B or higher passed processing suitability.

A: No uplift was confirmed.
B: The uplift was hardly confirmed.
C: The uplift was confirmed, and peeling occurred.

[Example 1]

A decoration layer was formed using two-part curing printing ink consisting of acrylic-urethane resin on one face of a base material layer (colored polypropylene resin sheet having a thickness of 60 μm) treated by corona discharge on both sides. Subsequently, adhesive layer A consisting of a urethane resin adhesive and having a thickness of 3 μm was formed on the decoration layer.

Subsequently, a resin composition containing 0.12 parts by mass of hydroxyphenyltriazine ultraviolet absorber 1 (trade name: TINUVIN 460, manufactured by BASF SE) and 0.15 parts by mass of hydroxyphenyltriazine ultraviolet absorber 2 (trade name: TINUVIN 477, manufactured by BASF SE) per 100 parts by mass of polypropylene resin was heated, melted, and extruded onto the adhesive layer A using a T-die extruder to form a transparent resin layer having a thickness of 80 μm.

After the surface treatment of the transparent resin layer by corona discharge, a resin composition containing a mixture of a composition consisting of a polycarbonate urethane-acrylic copolymer and acrylic polyol, and hexamethylene diisocyanate at a mass ratio of 100:5 was applied onto the transparent resin layer and dried to form a primer layer having a thickness of 4 μm.

Subsequently, a resin composition containing 2 parts by mass of hydroxyphenyltriazine ultraviolet absorber 1 (trade name: TINUVIN 460, manufactured by BASF SE) and 3 parts by mass of a hindered amine light stabilizer (trade name: TINUVIN 123, manufactured by BASF SE) per 100 parts by mass of an ionizing radiation curable resin composition consisting of a trifunctional urethane acrylate oligomer having a weight-average molecular weight of 4000 was applied onto the primer layer, and the ionizing radiation curable resin composition was cured by irradiation with electron beam so that a top coat layer having a thickness of 5 μm was formed to form a surface protection layer consisting of the primer layer and the top coat layer.

Subsequently, a wood-grain conduit-like concavo-convex pattern having a depth of 50 μm was formed by embossing from above the top coat layer to obtain a decorative sheet of Example 1. The obtained decorative sheet was evaluated for its weather resistance by the method described above. Absorbances and evaluation results are shown in Table 1.

[Examples 2 to 4]

Decorative sheets of Examples 2 to 4 were prepared in the same manner as in Example 1 except that the amounts of the ultraviolet absorbers contained in the resin compositions to form the transparent resin layer and the top coat layer were changed as shown in Table 1. The obtained decorative sheets were evaluated for their weather resistance by the method described above. Absorbances and evaluation results are shown in Table 1.

[Example 5]

A decorative sheet was prepared in the same manner as in Example 1 except that the base material layer in Example 1 was changed to a polypropylene resin sheet (thickness: 80 μm, degree of crystallinity: 70%, propylene-ethylene random copolymer (ethylene content: 4.5% by mass or less)). The obtained decorative sheet was evaluated for its construction suitability, long-term close contact and processing suitability by the methods described above. Absorbances and evaluation results are shown in Table 2.

[Example 6]

A decorative sheet was prepared in the same manner as in Example 1 except that the base material layer in Example 1 was changed to a polypropylene resin sheet (thickness: 60 μm, degree of crystallinity: 50%, propylene-ethylene random copolymer (ethylene content: 4.5% by mass or less)). The obtained decorative sheet was evaluated for its construction suitability, long-term close contact and processing suitability by the methods described above. Absorbances and evaluation results are shown in Table 2.

[Example 7]

A decorative sheet was prepared in the same manner as in Example 1 except that: the base material layer in Example 1 was changed to a polypropylene resin sheet (thickness: 60 μm, degree of crystallinity: 40%, propylene-ethylene random copolymer (ethylene content: 4.5% by mass or less)); and the thickness of the transparent resin layer was set to 40 μm. The obtained decorative sheet was evaluated for its construction suitability, long-term close contact and processing suitability by the methods described above. Absorbances and evaluation results are shown in Table 2.

[Comparative Examples 1 to 3]

Decorative sheets of Comparative Examples 1 to 3 were prepared in the same manner as in Example 1 except that the amounts of the ultraviolet absorbers contained in the resin compositions to form the transparent resin layer and the top coat layer were changed as shown in Table 1. The obtained decorative sheets were evaluated for their weather resistance by the method described above. Absorbances and evaluation results are shown in Table 1.

[Comparative Example 4]

A decorative sheet was prepared in the same manner as in Example 1 except that: the base material layer in Example 1 was changed to a polyvinyl chloride resin sheet (thickness: 120 $\mu$m; which was prepared by extrusion-molding a resin composition containing 33 parts by mass of a polyester plasticizer (adipic acid polyester) as a plasticizer per 100 parts by mass of polyvinyl chloride resin); and neither the adhesive layer A nor the transparent resin layer was established. The obtained decorative sheet was evaluated for its construction suitability, long-term close contact and processing suitability by the methods described above. Absorbances and evaluation results are shown in Table 2.

**Table 1**

| | Example | | | | Comparative Example | | |
|---|---|---|---|---|---|---|---|
| | 1 | 2 | 3 | 4 | 1 | 2 | 3 |
| Transparent resin layer | | | | | | | |
| Ultraviolet absorber 1 (parts by mass) | 0.12 | 0.12 | 0.5 | 0.12 | 0.12 | 0.12 | 0.12 |
| Ultraviolet absorber 2 (parts by mass) | 0.15 | - | - | - | - | - | 0.15 |
| Top coat layer | | | | | | | |
| Ultraviolet absorber 1 (parts by mass) | 2.0 | 1.0 | 4.0 | 1.5 | 2.0 | 1.5 | 1.5 |
| Ultraviolet absorber 2 (parts by mass) | - | 1.5 | 6.0 | 1.0 | - | - | - |
| Absorbance | | | | | | | |
| Absorbance $A_{11}$(360-380nm) | 0.2 | 0.4 | 1.2 | 0.3 | 0.2 | 0.1 | 0.1 |
| Absorbance $A_{12}$(360-380nm) | 0.5 | 0.5 | 1.5 | 0.4 | 0.3 | 0.2 | 0.4 |
| Absorbance $A_{10}$(360-380nm) | 0.3 | 0.1 | 0.3 | 0.1 | 0.1 | 0.1 | 0.3 |
| Absorbance $A_{21}$(310nm) | 0.8 | 0.8 | 1.2 | 0.3 | 0.8 | 0.6 | 0.3 |
| Absorbance $A_{22}$(310nm) | 1.5 | 1.2 | 1.5 | 0.4 | 1.2 | 1.0 | 1.3 |
| Absorbance $A_{20}$(310nm) | 0.7 | 0.4 | 0.3 | 0.1 | 0.4 | 0.4 | 0.7 |
| Absorbance $A_{11}$/Absorbance $A_{12}$ | 0.40 | 0.80 | 0.80 | 0.75 | 0.67 | 0.50 | 0.25 |
| Evaluation of weather resistance | | | | | | | |
| 800 hr | A | A | A | B | B | C | C |
| 1000 hr | B | B | A | B | C | D | D |

**Table 2**

| | Example | | | Comparative Example |
|---|---|---|---|---|
| | 5 | 6 | 7 | 4 |
| Transparent resin layer | | | | |
| Ultraviolet absorber 1 (parts by mass) | 0.12 | 0.12 | 0.12 | - |
| Ultraviolet absorber 2 (parts by mass) | 0.15 | 0.15 | 0.15 | - |
| Top coat layer | | | | |
| Ultraviolet absorber 1 (parts by mass) | 2.0 | 2.0 | 2.0 | 2.0 |

(continued)

| | Example | | | Comparative Example |
|---|---|---|---|---|
| | 5 | 6 | 7 | 4 |
| Ultraviolet absorber 2 (parts by mass) | - | - | - | - |
| Water vapor transmission rate (g/m$^2$·24h) | 1.5 | 5 | 10 | 50 |
| Construction suitability | A | A | A | C |
| Long-term close contact | B | A | A | A |
| Processing suitability | A | A | A | C |

From the results of Table 1, it was confirmed that a decorative sheet having absorbance $A_{11}$ of more than 0.1 and absorbance $A_{12}$ of more than 0.3 is excellent in weather resistance. On the other hand, it was confirmed that excellent weather resistance cannot be obtained if at least one of absorbance $A_{11}$ and absorbance $A_{12}$ does not satisfy the condition. The decorative sheet of Example 3 is an example using ultraviolet absorbers in an amount as large as 10 parts by mass in total in the top coat layer. An ultraviolet absorber may be used in a large amount in the top coat layer, and further, in the transparent resin layer, as in Example 3. In the case of requiring stricter weather resistance, this example can be suitably adopted because much better weather resistance was obtained in the evaluation as compared with other Examples. On the other hand, the effect of improvement in weather resistance relative to the amount of the ultraviolet absorber used was saturated. Also in consideration of the suppression of bleed-out, the amount of the ultraviolet absorption may be a smaller amount. It is considered that the amount of the ultraviolet absorption can be determined by comprehensively taking required performance related to weather resistance, efficient obtainment of weather resistance, etc., into consideration.

From the results of Table 2, it was confirmed that a decorative sheet having a property as a water vapor transmission rate within the range of 0.75 g/m$^2$·24 h or more and 45 g/m$^2$·24 h or less is not only excellent in weather resistance but excellent in construction suitability, long-term close contact and processing suitability. On the other hand, from the results of Comparative Example 4, it was confirmed that: excellent weather resistance is not obtained without the transparent resin layer; and a water vapor transmission rate of more than 45 g/m$^2$·24 h reduces, particularly, construction suitability and processing suitability.

Industrial Applicability

The decorative sheet of the present invention has excellent weather resistance and as such, is suitably used as a decorative sheet for various members such as building interior members such as walls, ceilings, floors, and front doors or exterior members such as exterior walls, roofs, eave ceilings, fences, and gates, joinery or fixture members such as window frames, doors, railings, baseboards, crown moldings, and covers as well as general furniture such as drawers, shelves, and desks, kitchen furniture such as dining tables and sinks, or cabinets for light electrical products or office automation equipment, particularly, members for use in environments exposed directly to sunlight, and members for vehicle interior or exterior use. The decorative material of the present invention is suitably used as any of the various members described above, particularly, members for use in environments exposed directly to sunlight.

Reference Signs List

    100: Decorative sheet
    111: Top coat layer
    112: Primer layer
    110: Surface protection layer
    120: Transparent resin layer
    130: Adhesive layer A
    141: Picture layer
    142: Solid colored layer
    140: Decoration layer
    150: Base material layer
    200: Decorative material

210: Adhesive layer B
220: Adherend

## Claims

1. A decorative sheet comprising a base material layer, a transparent resin layer and a surface protection layer in the presented order, wherein at least one of the base material layer and the transparent resin layer is constituted by a resin composition comprising a resin having an ultraviolet absorption wavelength at least at 360 to 380 nm; and absorbance $A_{11}$ of the surface protection layer at wavelengths from 360 to 380 nm is more than 0.1, and absorbance $A_{12}$ of the transparent resin layer and the surface protection layer at wavelengths from 360 to 380 nm is more than 0.3, the absorbances being measured in accordance with JIS K0115: 2004.

2. The decorative sheet according to claim 1, wherein absorbance $A_{21}$ of the surface protection layer at a wavelength of 310 nm is 0.8 or more, and absorbance $A_{22}$ of the transparent resin layer and the surface protection layer at a wavelength of 310 nm is 1.1 or more.

3. The decorative sheet according to claim 1 or 2, wherein the resin having an ultraviolet absorption wavelength at least at 360 to 380 nm is at least one resin selected from the group consisting of polypropylene resin and vinyl chloride resin.

4. The decorative sheet according to any one of claims 1 to 3, wherein at least one of the transparent resin layer and the surface protection layer comprises a triazine ultraviolet absorber.

5. The decorative sheet according to claim 4, wherein the triazine ultraviolet absorber is a hydroxyphenyltriazine ultraviolet absorber.

6. The decorative sheet according to any one of claims 1 to 5, wherein at least one of the transparent resin layer and the surface protection layer comprises a light stabilizer.

7. The decorative sheet according to any one of claims 1 to 6, wherein the surface protection layer has a top coat layer comprising a cured product of a curable resin composition.

8. The decorative sheet according to claim 7, wherein the curable resin composition is an ionizing radiation curable resin composition.

9. The decorative sheet according to claim 7 or 8, wherein the surface protection layer further has a primer layer, and the primer layer is a layer formed between the top coat layer and the transparent resin layer.

10. The decorative sheet according to any one of claims 1 to 9, further comprising a decoration layer between the base material layer and the transparent resin layer.

11. The decorative sheet according to any one of claims 1 to 10, wherein a ratio of the absorbance $A_{11}$ to the absorbance $A_{12}$ (absorbance $A_{11}$/absorbance $A_{12}$) is 0.30 or more and 0.85 or less.

12. The decorative sheet according to any one of claims 1 to 11, wherein a water vapor transmission rate measured in accordance with Testing Methods for Determination of the Water Vapor Transmission Rate of Moisture-Proof Packaging Materials (Dish Method) stipulated by JIS Z0208: 1976 is 0.75 $g/m^2 \cdot 24$ h or more and 45 $g/m^2 \cdot 24$ h or less.

13. A decorative material comprising an adherend and a decorative sheet according to any one of claims 1 to 12.

14. The decorative material according to claim 13, further comprising an adhesive layer constituted by a urethane adhesive between the decorative sheet and the adherend.

15. The decorative material according to claim 14, wherein the urethane adhesive is a moisture curing adhesive.

16. The decorative material according to any one of claims 13 to 15, wherein the adherend is a metal member or a resin member.

[Fig. 1]

[Fig. 2]

**INTERNATIONAL SEARCH REPORT**

| International application No. |
| --- |
| PCT/JP2019/038253 |

**A. CLASSIFICATION OF SUBJECT MATTER**
Int.Cl. B32B33/00(2006.01)i, B32B27/30(2006.01)i, B32B27/32(2006.01)i

According to International Patent Classification (IPC) or to both national classification and IPC

**B. FIELDS SEARCHED**

Minimum documentation searched (classification system followed by classification symbols)
Int.Cl. B32B1/00-43/00, E04F13/00

Documentation searched other than minimum documentation to the extent that such documents are included in the fields searched
Published examined utility model applications of Japan       1922-1996
Published unexamined utility model applications of Japan     1971-2019
Registered utility model specifications of Japan             1996-2019
Published registered utility model applications of Japan     1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2018-144439 A (TOPPAN PRINTING CO., LTD.) 20 September 2018, claims, examples (Family: none) | 1-16 |
| A | JP 2009-113496 A (TOPPAN PRINTING CO., LTD.) 28 May 2009, claims, examples (Family: none) | 1-16 |
| A | JP 2012-106506 A (DAI NIPPON PRINTING CO., LTD.) 07 June 2012, claims, examples & JP 2006-306020 A | 1-16 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 18.10.2019 | 29.10.2019 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2019/038253

C (Continuation). DOCUMENTS CONSIDERED TO BE RELEVANT

| Category* | Citation of document, with indication, where appropriate, of the relevant passages | Relevant to claim No. |
|---|---|---|
| A | JP 2008-62416 A (TOPPAN PRINTING CO., LTD.) 21 March 2008, claims, examples<br>(Family: none) | 1-16 |
| A | JP 2018-43361 A (TOPPAN PRINTING CO., LTD.) 22 March 2018, claims, examples<br>& US 2019/0202192 A1, claims, examples & WO 2018/047361 A1 & EP 3511162 A1 & TW 201827223 A & CN 109689357 A & KR 10-2019-0047688 A | 1-16 |
| A | JP 2017-170867 A (TOPPAN PRINTING CO., LTD.) 28 September 2017, claims, examples<br>(Family: none) | 1-16 |
| P, A | JP 2018-171835 A (DAI NIPPON PRINTING CO., LTD.) 08 November 2018, claims, examples<br>(Family: none) | 1-16 |
| P, A | JP 2018-167495 A (DAI NIPPON PRINTING CO., LTD.) 01 November 2018, claims, examples<br>(Family: none) | 1-16 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000117905 A

- JP 2016137585 A